# EUROPÄISCHE PATENTANMELDUNG

(11) **EP 4 847 187 A1**
(43) Veröffentlichungstag der Anmeldung: **02.12.2026**
(21) Anmeldenummer: 26176282.7
(22) Anmeldetag: 04.05.2026
(51) Int. Cl.: B23K 26/323

(54) **FORMSCHLUSSFÜGEVERFAHREN ZUM FÜGEN EINES ERSTEN UND EINES ZWEITEN FÜGEPARTNERS**

(30) Priorität: 23.05.2025 DE 102025120173
(71) Anmelder: Robert Bosch GmbH, 70442 Stuttgart (DE)
(72) Erfinder: Stritt, Peter, 71229 Leonberg (DE); Ilin, Alexander, 71642 Ludwigsburg (DE); Wagner, Jonas, 71254 Ditzingen (DE); Ramsayer, Reiner, 71277 Rutesheim (DE)

(57) **Zusammenfassung**

Die Erfindung betrifft ein Verfahren zum formschlüssigen Fügen von einem ersten Fügepartner 2 und einem zweiten Fügepartner 3 in einer Formschlussrichtung 10, wobei der erste Fügepartner 2 eine Fügeaussparung 4,9 und der zweite Fügepartner 3 einen Fügeabschnitt 5 aufweist, wobei ein Zusatzmaterial 7 durch ein Laserstrahlverfahren im Bereich der Fügeaussparung 4,9 derart aufgeschmolzen wird, so dass das aufgeschmolzene Zusatzmaterial 7 im erstarrten Zustand ein Fügeelement 8 bildet, wobei das Fügeelement 8 in der Formschlussrichtung 10 an der Fügeaussparung 4,9 formschlüssig anliegt und der Fügeabschnitt 5 in der Formschlussrichtung 10 an dem Fügeelement 8 formschlüssig anliegt. Ferner betrifft die Erfindung auch eine Fügepartneranordnung.

## Beschreibung

Die Erfindung betrifft ein Verfahren zum formschlüssigen Fügen eines ersten und eines zweiten Fügepartners mittels eines Laserstrahlverfahrens unter Verwendung eines Zusatzmaterials.

### Stand der Technik

Die nachveröffentlichte Druckschrift DE 10 2023 211 662 beschreibt ein Verfahren zum formschlüssigen Fügen zweier Komponenten. Hierbei werden die Komponenten zumindest in einem jeweiligen Fügebereich aneinander oder ineinander angeordnet, wobei eine der Komponenten in ihrem Fügebereich mittels Laserstrahl derart angeschmolzen wird, dass durch plastische Verformung geschmolzenes Material der Komponente um einen Vorsprung der anderen Komponente herum, von einem Vorsprung der Komponente auf die andere Komponente herauf und/oder in eine Aussparung der anderen Komponente hinein fließt und dadurch die Komponenten formschlüssig miteinander verbunden werden.

### Offenbarung der Erfindung

Gegenstand der Erfindung ist ein Verfahren zum formschlüssigen Fügen von einem ersten und einem zweiten Fügepartner in einer Formschlussrichtung mit den Merkmalen des Anspruchs 1 und eine Fügepartneranordnung mit den Merkmalen des Anspruchs 13
Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist ein Verfahren zum formschlüssigen Fügen von einem ersten Fügepartner und einem zweiten Fügepartner in einer Formschlussrichtung und unter Verwendung eines Zusatzmaterials.

Insbesondere kann der erste Fügepartner und/oder der zweite Fügepartner eine zumindest abschnittsweise polyedrische Geometrie aufweisen oder als ein Polyeder ausgebildet sein. Bevorzugt weist der erste Fügepartner und/oder der zweite Fügepartner eine zumindest abschnittsweise zylindrische oder verrundete Geometrie auf oder ist als zylindrischer Körper ausgebildet.

Der erste Fügepartner weist dabei eine Fügeaussparung auf und der zweite Fügepartner einen Fügeabschnitt. Die Fügeaussparung und der Fügeabschnitt dienen in weiteren Verlauf des Verfahrens dazu, dass der erste Fügepartner und der zweite Fügepartner formschlüssig gefügt werden können. Die Fügeaussparung ist dabei bevorzugt so angeordnet, dass diese von außen zugänglich ist. Die Fügeaussparung kann dabei unterschiedliche Geometrien aufweisen. Insbesondere ist die Fügeaussparung quer zu der Formschlussrichtung geöffnet. Ferner ist die Fügeaussparung so ausgebildet und angeordnet, dass diese bei Betrachtung des ersten Fügepartner in Formschlussrichtung und insbesondere auch entgegen dieser, eine Hinterschneidung bildet.

Der Fügeabschnitt ist dabei wenigstens ein Abschnitt der Oberfläche des zweiten Fügepartners. Insbesondere kann der Fügeabschnitt auch eine Seite des zweiten Fügepartners bilden. Insbesondere ist der Fügeabschnitt als ein Abschnitt bzw. ein Teil der Sichtbaren Oberfläche ausgebildet. Zumindest ein Teil des Fügeabschnitts ist dabei quer zur Formschlussrichtung bzw. nicht parallel zu dieser angeordnet.

Die Fügeaussparung und/oder der Fügeabschnitt sind insbesondere umlaufend am jeweiligen Fügepartner angeordnet und in Draufsicht insbesondere als Kreisring ausgebildet. Insbesondere kann der zweite Fügepartner auch eine Aussparung, nach Art der Fügeaussparung und so wie diese bereits beschrieben wurde, aufweisen, wobei der Fügeabschnitt ein Abschnitt, insbesondere eine Oberflächenbereich dieser Aussparung sein kann.

Verfahrensgemäß ist es vorgesehen, dass der erste Fügepartner und der zweite Fügepartner aneinander angeordnet werden. Insbesondere könne die Fügepartner auch ineinander angeordnet werden, wobei die Fügepartner dabei bevorzugt eine jeweils zumindest abschnittsweise zueinander korrespondiere Geometrie aufweisen. Insbesondere werden die Fügepartner in direktem Kontakt zueinander, insbesondere spielfrei, oder in einem bestimmten Abstand zueinander, insbesondere einem Abstand entsprechend eines Spiels oder einer Toleranz, aneinander angeordnet. Insbesondere werden die Fügepartner so aneinander angeordnet, dass eine Relativbewegung der Fügepartner zumindest in einer Richtung, insbesondere entlang zumindest einer Achse verhindert wird. Bevorzugt werden die Fügepartner so aneinander angeordnet, dass eine Relativbewegung, insbesondere ein gegenseitiges Verschieben der Fügepartner nur noch in eine Richtung möglich ist. Ferner werden die Fügepartner bevorzugt entlang oder entgegengesetzt der Formschlussrichtung aneinander, insbesondere ineinander angeordnet.

Die Fügepartner werden dabei so aneinander angeordnet, dass die Fügeaussparung und der Fügeabschnitt in einem zusammenhängendem Raumbereich angeordnet sind bzw. sich ein Raumbereich von dem Fügeabschnitt in die Fügeaussparung erstreckt. Bevorzugt werden die Fügepartner auch so angeordnet, dass der Fügeabschnitt zumindest teilweise an eine Oberfläche des ersten Fügepartners oder die Oberfläche der Fügeaussparung angrenzt.

Im weiteren Verlauf des Verfahrens ist es vorgesehen, dass das Zusatzmaterial durch ein Laserstrahlverfahren im Bereich der Fügeaussparung aufgeschmolzen wird.

Das Zusatzmaterial kann dabei aus dem gleichen Material wie der erste und/oder der zweite Fügepartner ausgebildet sein oder einem Material welches sich von dem Material des ersten und/oder zweiten Fügepartners unterscheidet. Als das Zusatzmaterial können insbesondere gängige Zusatzmaterialien für Schweißverfahren, insbesondere Laserschweißverfahren verwendet werden.

Es ist vorgesehen, dass das Zusatzmaterial durch einen Wärmeeintrag durch das Laserstrahlverfahren aufgeschmolzen wird. Hierbei wird wenigstens ein Laserstrahl erzeugt. Der Laserstrahl wird dabei insbesondere durch ein Laserschweißgerät, insbesondere durch einen Laserschweißkopf eines Laserschweißgeräts erzeugt. Insbesondere können hierbei gängige Laserstrahlverfahren, insbesondere Laserschweißverfahren eingesetzt. Hierbei sind verschiedene Laserstrahlformen möglich, beispielsweise kann der Laserstrahl eine kreisförmige oder ringförmige Geometrie aufweisen.

Es ist vorgesehen, dass das Zusatzmaterial im Bereich der Fügeaussparung aufgeschmolzen wird. Hierbei wird das Zusatzmaterial insbesondere im Bereich der Fügeaussparung zugeführt. Die Zuführung des Zusatzmaterials kann dabei durch das Laserschweißgerät, insbesondere durch den Laserschweißkopf erfolgen oder durch eine externe Zuführung. Bevorzugt wird das Zusatzmaterial automatisiert und abgestimmt auf das Laserschweißgerät bzw. den Laserschweißkopf zugeführt.

Dabei kann das Zusatzmaterial im Bereich der Fügeaussparung so zugeführt werden, dass das Zusatzmaterial auf eine Oberfläche des ersten und/oder zweiten Fügepartners zugeführt wird und mit diesen in Kontakt gebracht wird, wobei das Zusatzmaterial aufgeschmolzen wird nachdem es mit der Oberfläche des ersten und/oder zweiten Fügepartners in Kontakt gebracht wurde. Hierbei kann das Zusatzmaterial insbesondere so zugeführt werden, dass das Zusatzmaterials mit einer Oberfläche der Fügeaussparung und/oder des Fügeabschnitts in Kontakt gebracht wird. Alternativ kann das Zusatzmaterial so zugeführt werden, dass das Zusatzmaterial nicht in Kontakt mit dem ersten und/oder zweiten Fügepartner gebracht wird und in einem Bereich oberhalb einer Oberfläche des ersten und/oder zweiten Fügepartners und außerhalb des Materials dieser aufgeschmolzen wird. Mit anderen Worten bedeutet dies, dass das Zusatzmaterial in einem Abstand zu einer Oberfläche des ersten und/oder zweiten Fügepartners aufgeschmolzen wird ohne, dass das Zusatzmaterials, im unaufgeschmolzenen Zustand, den ersten und/oder zweiten Fügepartner kontaktier bzw. berührt. Bevorzugt wird hierbei das Zusatzmaterial in einen ausreichend geringen Abstand an die Oberfläche der Fügeaussparung und/oder die Oberfläche des Fügeabschnitts zugeführt bzw. durch die Zuführung herangeführt und aufgeschmolzen.

Das Zusatzmaterial wird dabei durch den Wärmeeintrag des Laserstrahls aufgeschmolzen. Beispielsweise kann das Aufschmelzen durch Wärmeleitschweißen oder Tiefschweißen erfolgen. Durch die Energie des Laserstrahls findet dabei der Wärmeeintrag von der angestrahlten Oberfläche des Zusatzmaterials in das Material des Zusatzmaterials statt. Die Intensität bzw. Energie des Laserstrahls wird dabei so gewählt, dass ein ausreichender Wärmeeintrag in das Material stattfindet, um dieses aufzuschmelzen. Die Intensität bzw. Energie kann dabei je nach Material des Zusatzmaterials angepasst werden. Auch die Laserstrahlform kann dabei an das Material des Zusatzmaterials angepasst werden. Durch den Wärmeeintrag wird das Zusatzmaterial dabei lokal bis zu seiner Schmelztemperatur oder darüber hinaus erhitzt.

Insbesondere wird der Laserstrahl auf das Zusatzmaterial gerichtet, so dass der Laser nicht auf die Oberfläche des ersten und/oder zweiten Fügepartners trifft. Alternativ kann der Laser so ausgebildet sein und/oder auf das Zusatzmaterial gerichtet werden oder so durch das Zusatzmaterial abgeschwächt werden, dass der Laser bei einem Auftreffen auf die Oberfläche des ersten und/oder zweiten Fügepartners nicht zu einem Aufschmelzen des Materials des ersten und/oder zweiten Fügepartners führ. Eine weitere Alternative sieht vor, dass der Laserstrahl so fokussiert wird, dass der Fokusbereich nicht auf der Oberfläche oder unterhalb der Oberfläche im Material des ersten und/oder zweiten Fügepartners liegt.

Das Verfahren sieht vor, dass das aufgeschmolzene Zusatzmaterial auf die Oberfläche innerhalb der Fügeaussparung und auf den Fügeabschnitt aufgetragen wird. Dabei kann das aufgeschmolzene Zusatzmaterial so aufgetragen werden, dass dieses sich während und/oder nach dem Auftragen in einem aufgeschmolzenen, insbesondere schmelzflüssigen Zustand befindet. Nachdem das aufgeschmolzenen Zusatzmaterial aufgetragen wurde, erstreckt sich dieses, zumindest teilweise zusammenhängend, über zumindest einen Teilbereich der Fügeaussparung und zumindest einen Teilbereich des Fügeabschnitts. Bevorzugt wird dabei zumindest ein Teil der Fügeaussparung in Öffnungsrichtung der Fügeaussparung durch den Auftrag des Zusatzmaterials ausgefüllt.

Bevorzugt ist es vorgesehen, dass eine Relativbewegung zwischen den Fügpartnern und zumindest dem Zusatzmaterial, zusätzlich zu dessen Bewegung durch die Zuführung, erzeugt wird, so dass das aufgeschmolzenen Zusatzmaterial auf verschiedene Bereiche der Fügeaussparung und des Fügeabschnitts aufgetragen wird. Beispielsweise kann der Laserschweißkopf so verfahren werden, dass der Laserstrahl und das Zusatzmaterial, zusätzlich zur Zuführungsrichtung, relativ zur Fügeaussparung und zum Fügeabschnitt bewegt werden. Alternativ kann das Auftragen des aufgeschmolzenen Zusatzmaterials auch stationär erfolgen, wobei nur das Zusatzmaterial bewegt wird um dieses zuzuführen.

Im weiteren Verlauf des Verfahrens, bildet das aufgeschmolzene Zusatzmaterial im erstarrten Zustand ein Fügeelement. Die Geometrie des Fügeelement korrespondiert dabei zumindest abschnittsweise mit der Fügeaussparung und insbesondere auch mit dem Fügeabschnitt. Die Erstarrung des aufgeschmolzenen Zusatzmaterials zu dem Fügeelement erfolgt dabei durch ein Abkühlen des aufgeschmolzenen Materials. Insbesondere kann das aufgeschmolzene Zusatzmaterials eigenständig abkühlen oder aktiv abgekühlt werden, beispielsweise durch einen Luftstrom oder durch das Anströmen mit anderen Medien.

Das Fügeelement liegt dabei in der Formschlussrichtung an der Fügeaussparung formschlüssig an und der Fügeabschnitt liegt in der Formschlussrichtung an dem Fügeelement an. Mit anderen Worten ist das Fügeelement so angeordnet, dass dieses sich abschnittsweise in die Fügeaussparung erstreckt und ein Verschieben des Fügeelements in Formschlussrichtung durch die Fügeaussparung verhindert ist. Ferner ist das Fügeelement so angeordnet, dass dieses sich abschnittsweise auf den Fügeabschnitt erstreckt und ein Verschieben des Fügeabschnitts, insbesondre des zweiten Fügepartners mit dem Fügeabschnitt, in Formschlussrichtung durch das Fügeelement, dessen Bewegung in Formschlussrichtung durch die Fügeaussparung verhindert ist, verhindert. Hierbei wird das Fügeelement bevorzugt so gebildet, dass dieses keinen Stoffschluss, insbesondere Materialschluss mit zumindest dem Fügeabschnitt aufweist. Eine etwaige stoffschlüssige Verbindung, welche durch das Auftragen des aufgeschmolzenen Zusatzmaterials zwischen dem Fügeelement und dem ersten Fügepartner in der Fügeaussparung und/oder dem zweiten Fügepartner an dem Fügeabschnitt erzeugt wird, ist gemäß des Verfahrens nicht notwendig für einen Formschluss in Formschlussrichtung zwischen dem Fügeelement und dem Fügeausschnitt und dem Fügeabschnitt und dem Fügeelement. Insbesondere ist es auch möglich das Fügeelement additiv zu erzeugen, wobei beispielsweise aufgeschmolzenes Zusatzmaterial auf bereits erkaltetes erstarrtes Zusatzmaterial, insbesondere auf ein bereits durch das Verfahren erzeugts Fügeelement aufgetragen wird.

Durch das Verfahren, können zwei, insbesondere nicht stoffschlüssig bzw. verschweißbare Fügepartner formschlüssig über das Fügeelement verbunden werden. Ferner kann verhindert werden, dass der erste und/oder der zweite Fügepartner durch ein zu starkes erhitzen bzw. aufschmelzen thermisch geschädigt werden. Insbesondere kann das Fügeelement im Gegensatz zu einer herkömmlichen Schweißnaht einfach und kostengünstig entfernt werden ohne der erste und der zweite Fügepartner beschädigt werden.

In einer bevorzugten Ausgestaltung des Verfahrens, wird die Fügeaussparung als Führung für das Zusatzmaterial verwendet, wobei das Zusatzmaterial während der Zuführung in der Fügeaussparung geführt ist. Bevorzugt wird dabei auch der Laserstrahl durch das in der Fügeaussparung geführte Zusatzmaterial geführt bzw. durch die Führung des Zusatzmaterials in der Fügeaussparung auf das gerichtet. Hierbei ist es auch möglich, dass der Laserstrahl durch ein Hand-Laserschweißgerät erzeugt wird, wobei die Zuführung des Zusatzmaterials durch das Hand-Laserschweißgerät erfolgt. Insbesondere ist hierbei die Fügeaussparung entsprechend so ausgestaltet, dass eine möglichst genaue Führung des Zusatzmaterials erfolgen kann. Hierbei ergibt sich der Vorteil, dass einfach und Kostengünstige Laserschweißgerät verwendet werden können, welche keine komplexe und kostenintensive Bewegungssteuerung aufweisen müssen.

Eine weite bevorzugte Ausgestaltung sieht vor, dass einer der Fügepartner eine Aussparung aufweist und der andere Fügepartner in der Aussparung angeordnet wird. Die Fügepartner werde dabei insbesondere so ineinander angeordnet, dass ein gegenseitiges Verschieben nur noch entlang einer Achse möglich ist, wobei der Fügepartner, welcher in der Aussparung angeordnet wird bevorzugt nur noch eine Richtung, insbesondere in eine in Formschlussrichtung bewegt bzw. verschoben werden kann. Dabei kann der erste Fügepartner die Aussparung aufweisen, wobei der zweite Fügepartner in der Aussparung angeordnet wird. Alternativ kann auch der zweite Fügepartner die Aussparung aufweisen, wobei der erste Fügepartner in der Aussparung angeordnet wird. Die Aussparung kann dabei auch als Verdrehschutz dienen. Beispielsweise kann der erste oder der zweite Fügepartner als ein zylindrisches Kugellager ausgebildet sein, wobei der andere Fügepartner bevorzugt auch eine zylindrische Geometrie aufweist oder als zylindrischer Körper ausgebildet ist und in dem Kugellager angeordnet wird, beispielsweise durch ein Aufstecken des Kugellagers, oder das Kugellager in einer zylindrischen Aussparung des anderen Fügepartners angeordnet wird. Hierbei ergibt sich der Vorteil, dass ein zusätzlicher Formschluss erzeugt werden kann, welcher als Sicherung gegen ein Verdrehen und/oder ein Verschieben der Fügepartner gegeneinander genutzt werden kann. Insbesondere kann hierdurch die Prozessgenauigkeit gesteigert werden.

In einer möglichen Ausgestaltung ist es vorgesehen, dass das Fügeelement nach Art eines Rings gebildet wird. Mit anderen Worten bedeutet das, dass das aufgeschmolzenen Zusatzmaterial so in der Fügeaussparung und dem Fügeausschnitt aufgebracht wird, dass nach dem Abkühlen und dem Erstarren des aufgeschmolzenen Zusatzmaterials, ein Fügeelement in Form eines Rings gebildet wird oder ist. Das Fügeelement kann dabei als ein offener Ring, insbesondere als Ringabschnitt oder Bogen oder geschlossener, insbesondere durchgängiger Ring gebildet werden oder sein. Hierbei wird das Fügeelement insbesondere so als Ring gebildet, dass ein Verschieben quer zur Formschlussrichtung verhindert wird. Beispielsweise kann der Ring als Bogen gebildet werden, welcher sich mindestens um einen Winkel von mehr als 180° erstreckt. Hierdurch kann das Fügeelement vor einem Herausfallen aus der Fügeaussparung gesichert werden. Ferner kann hierdurch eine Homogene Kraftverteilung auf das Fügeelement und insbesondere auch auf den ersten und/oder den zweiten Fügepartner gewährleistet werden, wodurch die Langlebigkeit gesteigert und die Funktionalität verbessert werden kann.

In einer alternativen oder ergänzenden Ausgestaltung ist es vorgesehen, dass das Zusatzmaterials so aufgeschmolzen und/oder in die Fügeaussparung und den Fügeabschnitt aufgebracht wird, dass mehrere Fügeelemente gebildet werden. Dabei können die mehreren Fügeelemente jeweils als Ringabschnitt bzw. Bogen gebildet sein oder werden, insbesondere so wie dies bereits zuvor beschrieben wurde. Ferner ist es auch möglich, dass die Fügeelemente in einem zusammenhängenden Fügeabschnitt und/oder in einer zusammenhängenden Fügeaussparung gebildet werden oder sind und unabhängig voneinander vorliegen. Alternativ kann jeweils ein Fügeelement in einem jeweiligen Fügeabschnitt und/oder in einer jeweiligen Fügeaussparung angeordnet sein. Hierbei ergibt sich der Vorteil, dass bei einem nachträglichen entfernen der Fügeelemente nur einzelne Materialbereich entfernt werden müssen, um die Fügepartner zu trennen. Ferner können hierbei auch einzelne Fügeelemente entfernt werden, beispielsweise um diese zu ersetzten.

In einer ersten Weiterbildung des Verfahrens ist es vorgesehen, dass durch ein Anschmelzen des aufgeschmolzenen Zusatzmaterials an den ersten Fügepartner in der Fügeaussparung, eine stoffschlüssige Verbindung zwischen dem Fügeelement und dem ersten Fügepartner erzeugt wird. Insbesondere kann zusätzlich auch eine stoffschlüssige Verbindung zwischen einer Oberfläche, welche außerhalb der Fügeaussparung liegt und von dem Fügeelement abgedeckt bzw. überdeckt wird, und dem Fügeelement erzeugt werden. Die stoffschlüssige Verbindung kann hierbei zumindest als partielle Verschweißungen zwischen dem Fügeelement und dem ersten Fügepartner ausgebildet sein. Bevorzugt wird die stoffschlüssige Verbindung zwischen dem Fügeelement und dem ersten Fügepartner so erzeugt, dass das Zusatzmaterial einen gleichen oder höheren Schmelzpunkt als der erste Fügepartner aufweist und das Zusatzmaterial auf oder über die Schmelztemperatur des ersten Fügepartners erhitzt und aufgeschmolzen wird, wobei das Material des ersten Fügepartners durch einen Wärmeeintrag, welcher durch die Temperatur des aufgeschmolzenen Zusatzmaterials erzeugt wird, aufgeschmolzen wird und ein Materialschluss zwischen dem Material des ersten Fügepartners und dem Material des Zusatzmaterials erzeugt wird. Hierdurch kann ein zusätzlicher Stoffschluss bzw. Materialschluss zu dem ausgebildeten Formschluss zwischen dem ersten Fügepartner und dem Fügeelement erzeugt werden, wodurch beispielweise ein Verdrehen und/oder Verschieben des Fügeelements verhindert werden kann.

In einer zweiten alternativen oder ergänzenden Weiterbildung, ist es vorgesehen, dass durch ein Anschmelzen des aufgeschmolzenen Zusatzmaterials an den Fügeabschnitt des zweiten Fügepartners, eine stoffschlüssige Verbindung zwischen dem Fügeelement und dem zweiten Fügepartner erzeugt wird. Die stoffschlüssige Verbindung zwischen dem zweiten Fügepartner und dem Fügeelement ist dabei insbesondere so ausgebildet wie die stoffschlüssige Verbindung zwischen dem ersten Fügepartner und dem Fügeelement. Auch hierbei ergibt sich der Vorteil, die stoffschlüssige Verbindung ein Verdrehen und/oder Verschieben des Fügeelement verhindern kann. Ferner kann bei einer stoffschlüssigen Verbindung sowohl zwischen dem Fügeelement und dem ersten Fügepartner als auch zwischen dem Fügeelement und dem zweiten Fügepartner ein Verdrehen der beiden Fügepartner gegeneinander entgegengewirkt werden.

Eine Weiterbildung des Verfahrens sieht vor, dass wenigstens einer der Fügepartner, insbesondere beide Fügepartner während des Aufschmelzens des Zusatzmaterials bewegt, insbesondere gedreht und/oder in eine Vibration versetzt wird. Hierbei ist es insbesondere möglich, dass einer der Fügepartner bewegt wird, während der Laserstrahl und das Zusatzmaterial, abgesehen von der Bewegung des Zusatzmaterials durch die Zuführung, in einer festen Position verbleibt. Hierbei wird die Relativbewegung zwischen dem ersten und/oder zweiten Fügepartner und dem Laststrahl und dem Zusatzmaterial nur durch die Bewegung des ersten und/oder zweiten Fügepartners erzeugt. Alternativ ist es auch möglich, dass sich sowohl der erste und/oder der zweite Fügepartner als auch der Laserstrahl und das Zusatzmaterial bewegen. Die Bewegung des wenigstens einen Fügepartners wird dabei insbesondere maschinell bzw. automatisch erzeugt. Hierdurch ergibt sich der Vorteil, dass ein einfaches Laserschweißgerät, bzw. ein einfach gestalteter Laserstrahlerzeuger verwendet werden kann, welcher keine Bewegung des Laserstrahl erzeugen kann. Alternativ ergibt sich aus der Bewegung des ersten und/oder zweite Fügepartners in Kombination mit der Bewegung des Laserstrahls und des Zusatzmaterials der Vorteil, dass das Verfahren mehr Flexibilität bietet und/oder die Prozessgenauigkeit gesteigert werden kann.

In einer möglichen Ausgestaltung des Verfahrens ist es möglich, dass Verfahrensparameter, insbesondere auch Verfahrensparameter des Lasterstrahlverfahrens während durchgängig gleichbleibend sind oder verändert werden. Beispielsweise kann der Laserstrahl und das Zusatzmaterials mit einer gleichbleibenden Verfahrgeschwindigkeit bewegt werden. Alternativ oder ergänzend kann auch die Laserstrahlform und/oder die Intensität des Lasers und/oder die Zuführgeschwindigkeit des Zusatzmaterials gleichbleiben. Alternativ ist es auch möglich, dass die Verfahrgeschwindigkeit, die Laserstrahlform und/oder die Intensität des Lasers und/oder die Zuführgeschwindigkeit des Zusatzmaterials während des Verfahrens bzw. während des Aufschmelzens des Zusatzmaterials verändert werden. Alternativ oder ergänzend kann auch die Bewegung, insbesondere eine Drehrichtung und/oder Drehgeschwindigkeit von einem der Fügepartner während des Verfahrens gleichbleieben oder geändert werden. Hierdurch kann das Verfahren, insbesondere das Auftragen des aufgeschmolzenen Zusatzmaterials besonders genau gesteuert werden.

In einer bevorzugten Weiterbildung des Verfahrens ist es vorgesehen, dass zumindest das aufgeschmolzenen Zusatzmaterials mit einem Schutzgas beaufschlagt wird. Hierbei ist es möglich das Verfahren in einer Schutzgasatmosphäre durchzuführen und/oder das Schutzgas aktiv in den Bereich des Wärmeeintrags zuzuführen. Hierbei kann das aufgeschmolzene Zusatzmaterial durch ein Anströmen mit einem Schutzgas beaufschlagt werden. Insbesondere kann auch das Material des ersten und/oder zweiten Fügepartners mit einem Schutzgas beaufschlagt werden. Beispielsweise können hierbei gängige Schutzgase, so wie diese bei anderen Schweißverfahren oder speziell beim Laserschweißen verwendet werden, eingesetzt werden. Hierdurch können insbesondere die Eigenschaften des aufgeschmolzenen Zusatzmaterials positiv beeinfluss werden und die Prozessgenauigkeit gesteigert werden.

In einer ersten bevorzugten Ausgestaltung ist es vorgesehen, dass die Fügeaussparung als eine Nut ausgebildet ist. Die Nut ist insbesondere so angeordnet, dass diese sich quer zur Formschlussrichtung in den ersten Fügepartner erstreckt. Der erste Fügepartner bevorzugt so ausgebildet sein, dass die Nut umlaufend und endlos ist. Alternativ kann die Nut auch abschnittsweise an dem ersten Fügepartner angeordnet sein. Hierbei ergibt sich insbesondere der Vorteil, dass die Nut besonders gut als Führung für das Zusatzmaterial geeignet ist. Ferner kann das Fügeelement flexibel gestaltet und an die Nut angepasst werden.

In einer zweiten Ausgestaltung ist es vorgesehen, dass die Fügeaussparung als ein Durchgangsloch ausgebildet ist. Insbesondere können auch mehrere Durchgangslöcher in dem ersten Fügepartner angeordnet sein. Hierbei ist es vorgesehen das aufgeschmolzenen Zusatzmaterial in das Durchgangsloch einzubringen. Das Durchgangsloch ist dabei quer zur Formschlussrichtung in dem ersten Fügepartner angeordnet. Das Durchgangsloch kann dabei in Erstreckungsrichtung als rotationssymmetrisches Loch oder auch als Langloch ausgebildet sein. Insbesondere ist der Durchmesser oder die minimale Breite bei einem Langloch so gewählt, dass in das Durchgangsloch zugeführt oder in dem Durchgangsloch zugeführt werden kann. Hierbei ergibt sich der Vorteil, dass das Durchgangsloch bereichsweise in dem ersten Fügepartner angeordnet sein kann, so dass z.B. mehrere Fügeelemente je Durchgangsloch erzeugt werden können oder sich ein Fügeelement mit einem oder mehreren Durchgangslöchern formschlüssig gefügt werden kann. Ferner ergibt sich der Vorteil, dass das Durchgangsloch zu zwei Seiten geöffnet ist und das aufgeschmolzenen Zusatzmaterial von einer beliebigen Seite eingebracht werden kann, wodurch der Prozess flexibler gestaltet sein kann.

In einer dritten Ausgestaltung ist es vorgesehen, dass die Fügeaussparung als ein Sackloch ausgebildet ist, welches in gleicher weise angeordnet ist wie das bereits beschriebene Durchgangsloch und auch denselben Zweck erfüllt mit dem Unterschied, dass das aufgeschmolzene Zusatzmaterial nur von einer Seite in das Sackloch eingebracht werden kann. Insbesondere können auch mehrere Sacklöcher in dem ersten Fügepartner angeordnet sein. Hierbei ergibt sich der Vorteil, dass das Sackloch bereichsweise in dem ersten Fügepartner angeordnet sein kann, so dass z.B. mehrere Fügeelemente je Sackloch erzeugt werden können oder sich ein Fügeelement mit einem oder mehreren Sacklöchern formschlüssig gefügt werden kann. Ein weiterer Vorteil ist, dass bereits geringe Tiefen des Sacklochs ausreichen, um eine formschlüssige Verbindung zwischen dem Fügeelement und dem ersten Fügepartner auszubilden.

Besonders bevorzugt wird bei dem Verfahren als Zusatzmaterial ein Draht, insbesondere ein Schweißdraht so wie dieser bei gängigen Laserschweißverfahren eingesetzt wird, verwendet. Hierdurch kann das Zusatzmaterial kontinuierlich zugeführt werden. Auch eine Führung in der Fügeaussparung insbesondere der als Nut ausgebildeten Fügeaussparung wird hierdurch vereinfacht.

In einer Konkretisierung ist es vorgesehen, dass das Zusatzmaterial aus einem gleichartigen Material mit einem gleichen Schmelzpunkt ausgebildet ist oder dieses aufweist wie der erste und/oder der zweite Fügepartner. Alternativ ist es vorgesehen, dass das Zusatzmaterials aus einem zu dem ersten und/oder zweiten Fügepartner unterschiedlichen Materials mit einem unterschiedlichen Schmelzpunkt ausgebildet ist oder dieses aufweist. Das Material aus dem der erste Fügepartner, der zweite Fügepartner und das Zusatzmaterials ausgebildet ist, kann dabei ausgewählt sein aus einer Gruppe umfassend metallische Werkstoffe, insbesondere Aluminium, Aluminiumlegierungen, Eisen, Eisen-Kohlenstoff-Legierungen (Stahl), Kupfer, Kupferlegierungen, und Kunststoffe.

Ein weiterer Gegenstand er Erfindung ist eine Fügepartneranordnung, mit einem ersten Fügepartner, einem zweiten Fügepartner und einem Fügeelement, insbesondere so wie diese bereits zuvor beschrieben wurden, wobei der erste Fügepartner und der zweite Fügepartner insbesondere nach dem bereits zuvor beschriebenen Verfahren durch das Fügeelement gefügt sind und das Fügeelement durch das bereits zuvor beschriebene Verfahren erzeugt ist. Die Fügepartneranordnung umfasst somit einen ersten Fügepartner, einen zweiten Fügepartner und ein Fügeelement, wobei der erste Fügepartner und der zweite Fügepartner in einer Formschlussrichtung formschlüssig gefügt sind, wobei der erste Fügepartner eine Fügeaussparung und der zweite Fügepartner einen Fügeabschnitt aufweist, wobei ein erstarrtes Zusatzmaterial das Fügeelement bildet, wobei das Fügeelement in der Formschlussrichtung an der Fügeaussparung formschlüssig anliegt und der Fügeabschnitt in der Formschlussrichtung an dem Fügeelement formschlüssig anliegt.

Mit anderen Worten ist der Kern der Erfindung die gezielte Nutzung von Zusatzwerkstoff zur Erzeugung einer formschlüssigen Verbindung (durch Fügeelement). Wesentlich ist hierbei, dass der Grundkörper (erster Fügepartner) geometrisch derart ausgebildet ist, dass der Zusatzwerkstoff gezielt aufgebracht (in die Fügeaussparung) werden kann (beispielsweise in eine umlaufende Nut). Bevorzugt kann die Nut der Prozessführung des Zusatzwerkstoffes und Drahtführung dienen

Insbesondere kann vorteilhaft sein, wenn der Drahtwerkstoff einen niedrigeren Schmelzpunkt hat als das Grundmaterial da damit die Schmelze keine Aufschmelzung an den Bauteilen erzeugt wird. Bspw. wenn der Draht aus Aluminium ist und eine Verbindung an einem Stahlteil gemacht wird. Damit liegt bei optimaler Prozessführung am Ende ein Ring aus erstarrter Schmelze in der Nut der keine Schmelzverbindung/Schweißverbindung mit dem Stahlbauteil hat.

Alternativ kann es auch vorteilhaft sein, wenn der Draht einen höheren Schmelzpunkt hat da damit sehr heiße Schmelze eingebracht wird und ausreichend Energie zum Aufschmelzen der Bauteile zur Verfügung steht. Das kann gerade bei der Variante segmentweises auffüllen (mehrere Fügeelemente) von Nutzen vorteilhaft sein, insbesondere auch wenn von außen befüllt wird (Durchgangsloch). Insbesondere bei einem Befüllen von außen, können sonst schwer zugängliche stellen befüllt (Auftragen von aufgeschmolzenem Zusatzmaterial) werden.

Vorteile bei der Erzeugung von mehreren, miteinander nicht verbundenen Fügeelementen, ergibt sich der Vorteil, im Reparaturfall die bereits platzierten Segmente (jeweiligen Fügeelemente) mechanisch entfernt werden und an den bisher nicht bearbeiteten stellen Segmente (jeweilige Fügeelemente) er-zeugt werden.

Durch das Verfahren ergeben sich insbesondere die Folgenden Vorteile:
- Artfremde Verbindungen realisiert werden, z.B. Aluminium/Stahl, Stahl/Cu
- Lösbare Verbindung durch Aufbrechen des Zusatzwerkstoffes und/oder Umschmelzen des Zusatzwerkstoffes (vorzugsweise besitzt der Zusatzwerkstoff einen niedrigeren Schmelzpunkt als der Grundwerkstoff)
- Geringere Erwärmung des Grundkörpers (erster Fügepartner) und des zu fixierenden Bauteils (zweiter Fügepartner) (z.B. Lager), insbesondere Vermeidung thermischer Schädigung
- Das Verfahren kann auch mit einem Laserhandschweißgerät umgesetzt werden, da eine Führung des Schweißzusatzdrahtes besteht.
- Mit einem Laserhandschweißgerät ist auch die Reparaturfähigkeit der Verbindung gewährleistet.
- Das Umschmelzen des Zusatzwerkstoffes erfolgt z.B. im Wärmeleitschweißmodus wodurch eine geringeres Schweißspritzeraufkommen als Tiefschweißmodus zu erwarten ist.
- Geringere Kosten gegenüber zusätzlichem mechanischem Element und Einpressvorgang
- Höhere axiale Positioniergenauigkeit, da der Formschluss in der flüssigen Phase des Zusatzwerkstoffes erfolgt.

Weitere Merkmale, Vorteile und Wirkung der Erfindung ergeben sich aus der nachfolgenden Beschreibung eines bevorzugten Ausführungsbeispiels der Erfindung sowie der beigefügten Figuren. Diese zeigen:
- Figur 1a: einen Teilausschnitt einer Fügepartneranordnung mit einer als Nut ausgebildeten Fügeaussparung sowie einen Laserstrahl und ein Zusatzmaterial,
- Figur 1b: die Fügepartneranordnung aus Figur 1a mit einem erzeugten Fügeelement,
- Figur 2a: einen Teilausschnitt einer Fügepartneranordnung mit einer als Durchgangsloch ausgebildeten Fügeaussparung während der Erzeugung eines Fügeelements,
- Figur 2b: einen Teilausschnitt der Fügepartneranordnung aus Figur 2a, dargestellt in Erstreckungsrichtung des Durchgangslochs mit einem erzeugten Fügeelement,
- Figur 3a: eine Fügepartneranordnung mit einem Kugellager als zweiten Fügepartner, wobei die Fügepartneranordnung mehrere Fügeelemente aufweist.
- Figur 3b: die Fügepartneranordnung aus Figur 3a in einer Draufsicht.

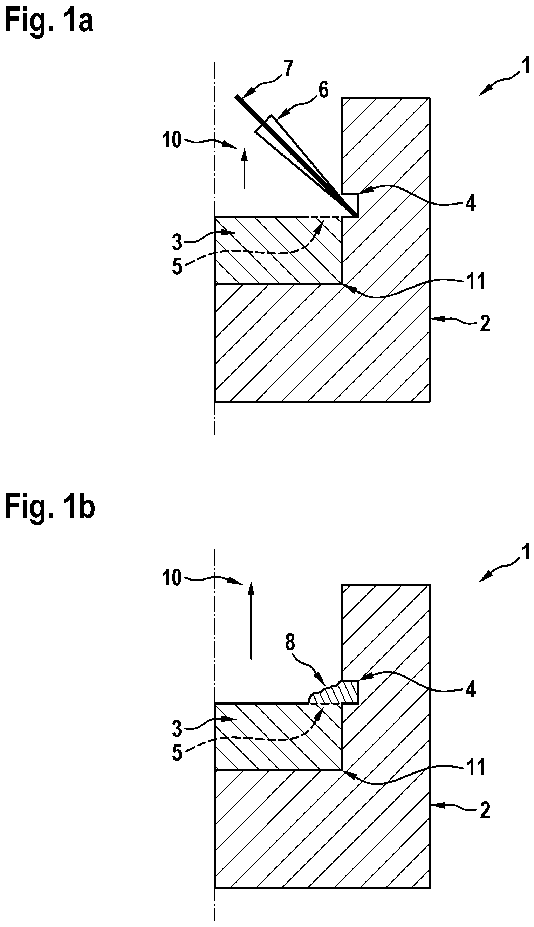

Die Darstellung in Figur 1a, zeigt einen Teilausschnitt einer Fügepartneranordnung 1 in Querschnittdarstellung. Die Fügepartneranordnung 1 umfasst dabei einen ersten Fügepartner 2 und einen zweiten Fügepartner 3. Die Fügepartneranordnung 1 ist dabei rotationssymmetrisch ausgebildet, wobei der erste Fügepartner 2 und der zweite Fügepartner 3 jeweils als rotationssymmetrische Körper ausgebildet sind. Die Rotationsachse ist dabei durch die Strichpunktlinie dargestellt. Der erste Fügepartner 2 weist dabei eine Aussparung 11 auf, wobei der zweite Fügepartner 3 in der Aussparung 11 angeordnet ist. Der zweite Fügepartner 3 ist dabei so in der Aussparung 11 des ersten Fügepartner 2 angeordnet, dass der zweite Fügepartner 3 nur noch in Formschlussrichtung 10, dargestellt durch den Pfeil 10, verschiebbar gelagert ist.

Der erste Fügepartner 2 weist dabei eine als Nut 4 ausgebildete Fügeaussparung auf. Der zweite Fügepartner weist dabei einen Fügeabschnitt 5, dargestellt durch die unterbrochene Linie. Hierbei ist der zweite Fügepartner 3 so an dem ersten Fügepartner 2 angeordnet, dass der Fügeabschnitt 5 an der Nut 4 angrenzt bzw. bündig zu dieser ist. Ferner ist ein Laserstrahl 6, welcher durch ein Laserstrahlverfahren erzeugt ist, und ein als Draht 7 ausgebildetes Zusatzmaterial, dargestellt. Die Darstellung zeigt auch, dass der Draht 7 in die Nut 4 zugeführt wird. Die Nut 4 dient hierbei als Führung für den Draht. Hierbei wird das Zusatzmaterial 7 durch den Laserstrahl 6 aufgeschmolzen, um ein Fügeelement zu erzeugen, welches in der Darstellung zu Figur 1a nicht dargestellt ist.

Die Darstellung in Figur 1b zeigt dieselbe Fügepartneranordnung 1 wie in der Darstellung zu Figur 1a, wobei hier das Fügeelement 8, durch ein Aufschmelzen des Zusatzmaterials 7 durch den Laserstrahl 6 und durch ein Auftragen des aufgeschmolzenen Zusatzmaterials 7 in die Nut 4 und auf den Fügeabschnitt 5, erzeugt ist. Das Fügeelement 8 ist dabei als erkaltete und erstarrte Schmelze ausgebildet. Das Fügeelement 8 erstreckt sich dabei aus der Nut 4 auf den Fügeabschnitt 5. Das Fügeelement ist dabei in der Formschlussrichtung 10 formschlüssig mit der Nut 4 gefügt und der zweite Fügepartner 3 ist dabei, durch ein Anliegen des Fügeabschnitts 5 an das Fügeelement 8 formschlüssig mit dem Fügeelement 8 gefügt. Mit anderen Worten bedeutet dies, dass ein Verschieben des zweiten Fügepartners 3 in Formschlussrichtung 10 durch das Fügelement 8 verhindert wird, während ein Verschieben des Fügeelements 8 in Formschlussrichtung 10 durch die Nut 4 verhindert wird.

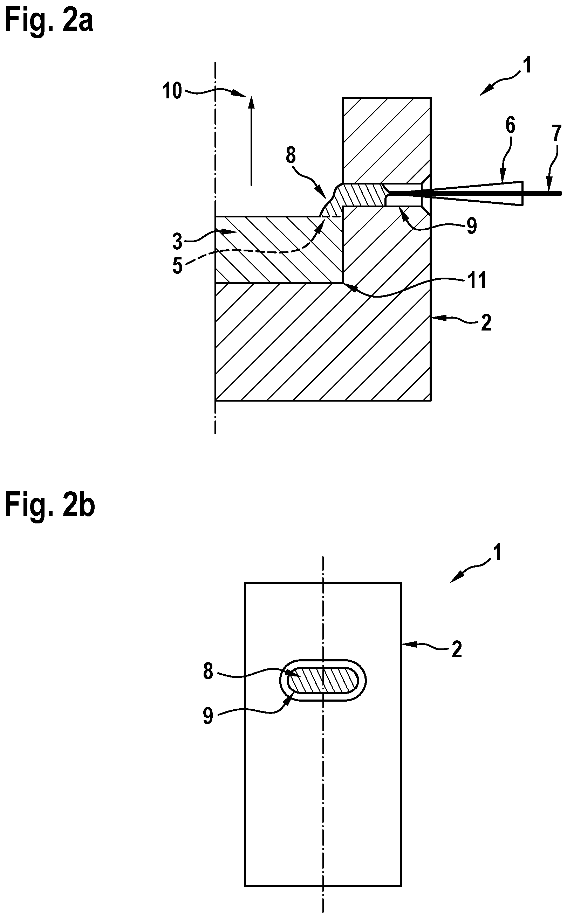

Die Darstellung in Figur 2a, zeigt einen Teilausschnitt einer Fügepartneranordnung 1 in Querschnittdarstellung. Die dargestellte Fügepartneranordnung 1 ist, weist dabei einen ersten Fügepartner 2 und einen zweiten Fügepartner 3 auf, wobei diese den Fügepartnern 2 und 3 aus der Darstellung in Figur 1 a und b entsprechen, mit dem Unterschied, dass die Fügeaussparung in der Darstellung zu Figur 2a als ein Durchgangsloch 9 ausgebildet ist. Das Durchgangsloch 9 ist dabei als ein Langloch ausgebildet, wobei die Breite des als Langloch ausgebildeten Durchgangsloch 9 sich in Ansichtsrichtung erstreckt.

Die Darstellung in Figur 2a zeigt auch ein Fügeelement 8 während seiner Erzeugung sowie einen Laserstrahl 6 und ein Zusatzmaterial 7. Hierbei wird das Fügeelement 8 durch ein Aufschmelzen des Zusatzmaterials 7 durch den Laserstrahl 6 erzeugt. Die Darstellung zeigt auch, dass der Laserstrahl 6 und das Zusatzmaterial 7 parallel angeordnet sind. Das Zusatzmaterial 7 wird dabei in das Durchgangsloch 9 Zugeführt bzw. in dem Durchgangsloch 9 zugeführt und durch den Laserstrahl 6 aufgeschmolzen. Hierbei wird bevorzugt ein Laserschweißgerät, welches nicht dargestellt ist, mit einem schmalen Laserschweißkopf verwendet, welche in das Durchgangsloch 9 eingeführt werden kann. Insbesondere ist der Bereich des Fügeelements 8 welche bereits auf dem Fügeabschnitt 5 aufgetragen ist erkaltet oder erstarrt, während der Bereich des Fügeelements 8, welcher sich im Einflussbereich des Laserstrahls befindet oder aufgeschmolzen ist, als Schmelze vorliegt. Hierbei wird die Bewegung, insbesondere ein Verschieben des Fügeelements 8 in Formschlussrichtung 10, durch ein Anliegen des Fügeelement in dem Durchgangloch 9 verhindert. Eine Bewegung, insbesondere ein Verschieben des zweiten Fügepartner 3 in Formschlussrichtung wird dabei durch ein Anliegen des Fügeabschnitts 5 des zweiten Fügepartners 3 an dem Fügeelement 8 verhindert.

Die Darstellung in Figur 2b zeigt die Fügepartneranordnung 1 aus der Darstellung in Figur 2a, wobei diese in Erstreckungsrichtung des Durchgangslochs 9 bzw. in einer Seitenansicht dargestellt ist. Die Darstellung in Figur 2 zeigt dabei einen Teilausschnitt der Fügepartneranordnung 1. Die Darstellung zeigt, dass das Durchgangsloch 9 vollumfänglich von dem erstarrten Zusatzmaterial 7 ausgefüllt ist.

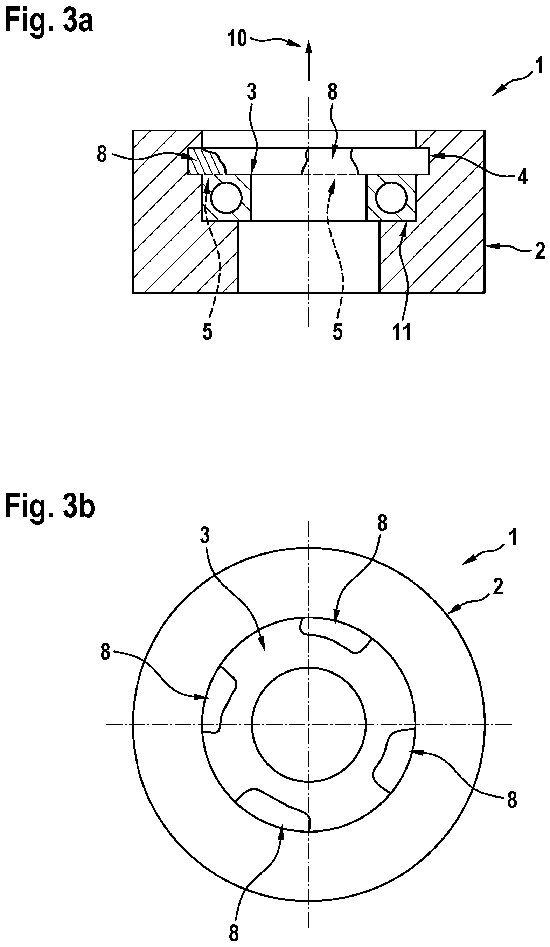

Die Darstellung in Figur 3a zeigt eine Fügepartneranordnung 1 in Querschnittdarstellung. Die Fügepartneranordnung 1 umfasst dabei einen ersten Fügepartner 2, einen zweiten Fügepartner 3 und mehrere Fügeelemente 8, wobei in der Querschnittdarstellung zwei Fügeelemente 8 dargestellt sind. Der erste Fügepartner 2 ist dabei als ein zylindrischer Körper ausgebildet und weist eine zylindrische Aussparung 11 auf. Der zweite Fügepartner 3 ist dabei als ein zylindrisches Kugellager ausgebildet und in der Aussparung 11 angeordnet. Der zweite Fügepartner 3 ist dabei so in der Aussparung 11 angeordnet, dass dieser, ohne das Vorhandensein von den dargestellten Fügeelementen 8 nur noch in eine Formschlussrichtung 10 verschiebbar ist. Der erste Fügepartner 2 weist dabei eine als Nut 4 ausgebildete Fügeaussparung auf, welche umlaufend und endlos in dem ersten Fügepartner 2 angeordnet ist. Die Fügeelemente 8 erstrecken sich dabei jeweils aus der Nut 4 des ersten Fügepartners 2 auf einen jeweiligen Fügeabschnitt 5 des zweiten Fügepartners 3. Ferner zeigt die Darstellung in Figur 2a, dass die beiden dargestellten Fügeelemente 8 verteilt und unverbunden in der Nut 4 und auf dem jeweiligen Fügeabschnitt 5 angeordnet sind. Die Darstellung in Figur 3a zeigt auch, dass der als Kugellager ausgebildete zweite Fügepartner 3 in der Formschlussrichtung 10 an seinen jeweiligen Fügeabschnitten 5 an den jeweiligen Fügeelementen 8 anliegt und die jeweiligen Fügeelement 8 in Formschlussrichtung 10 an der Nut 4 bzw. am oberen Rand der Nut 4 anliegen, wodurch ein Verschieben des zweiten Fügepartners 3 nicht mehr möglich ist.

Die Darstellung in Figur 3b zeigt dieselbe Fügepartneranordnung 1 wie in der Darstellung zu Figur 3a. Die in Figur 3a dargestellte Fügepartneranordnung 1 ist dabei vollständig und in Draufsicht dargestellt. Die Darstellung zeigt dabei alle vier Fügeelemente 8, wobei diese in Umfangsrichtung der Nut 4, welche hierbei verdeckt ist und als Hinterschneidung in dem ersten Fügepartner 2 vorliegt, verteilt angeordnet sind und sich aus der Nut 4 auf den zweiten Fügepartner 3 erstrecken. Hierbei sind die die dargestellten Fügepartner 8 zumindest stoffschlüssig mit dem Material des ersten Fügepartner 2 verbunden, wodurch ein Verrutschen, insbesondere ein Herausrutschen aus der Nut 4 verhindert wird. Ferner ist es auch möglich, dass die dargestellten Fügeelemente 8 so erzeugt werden, dass diese stoffschlüssig mit dem Material des zweiten Fügepartners 3 verbunden werden oder sind.

## Patentansprüche

1. Verfahren zum formschlüssigen Fügen von einem ersten Fügepartner (2) und einem zweiten Fügepartner (3) in einer Formschlussrichtung (10),
wobei der erste Fügepartner (2) eine Fügeaussparung (4,9) und der zweite Fügepartner (3) einen Fügeabschnitt (5) aufweist,
wobei ein Zusatzmaterial (7) durch ein Laserstrahlverfahren im Bereich der Fügeaussparung (4,9) derart aufgeschmolzen wird,
so dass das aufgeschmolzene Zusatzmaterial (7) im erstarrten Zustand ein Fügeelement (8) bildet, wobei das Fügeelement (8) in der Formschlussrichtung (10) an der Fügeaussparung (4,9) formschlüssig anliegt und der Fügeabschnitt (5) in der Formschlussrichtung (10) an dem Fügeelement (8) formschlüssig anliegt.

2. Verfahren nach Anspruch 1, wobei die Fügeaussparung (4,9) als Führung für das Zusatzmaterial (7) verwendet wird, wobei das Zusatzmaterial (7) während der Zuführung in der Fügeaussparung (4,9) geführt ist.

3. Verfahren nach einem der vorhergehenden Ansprüche, wobei einer der Fügepartner (2,3) eine Aussparung (11) aufweist und der andere Fügepartner (2,3) in der Aussparung (11) angeordnet wird.

4. Verfahren nach einem der vorhergehenden Ansprüche, wobei das Fügeelement (8) nach Art eines Rings gebildet wird.

5. Verfahren nach einem der vorhergehenden Ansprüche, wobei das Zusatzmaterial (7) so aufgeschmolzen wird, dass mehrere Fügeelemente (8) gebildet werden.

6. Verfahren nach einem der vorhergehenden Ansprüche, wobei durch ein Anschmelzen des aufgeschmolzenen Zusatzmaterials (7) an den ersten Fügepartner (2) in der Fügeaussparung (4,9), eine stoffschlüssige Verbindung zwischen dem Fügeelement (8) und dem ersten Fügepartner (2) erzeugt wird.

7. Verfahren nach einem der vorhergehenden Ansprüche, wobei durch ein Anschmelzen des aufgeschmolzenen Zusatzmaterials (7) an den Fügeabschnitt (5) des zweiten Fügepartners (3), eine stoffschlüssige Verbindung zwischen dem Fügeelement (8) und dem zweiten Fügepartner (3) erzeugt wird.

8. Verfahren nach einem der vorhergehenden Ansprüche, wobei wenigstens einer der Fügepartner (2,3) während Aufschmelzens des Zusatzmaterial (7) bewegt, insbesondere gedreht und/oder in eine Vibration versetzt wird.

9. Verfahren nach einem der Ansprüche 1 bis 8, wobei die Fügeaussparung (4) als eine Nut (4) ausgebildet ist.

10. Verfahren nach einem der Ansprüche 1 bis 8, wobei die Fügeaussparung (9) als ein Durchgangsloch (9) ausgebildet ist.

11. Verfahren nach einem der Ansprüche 1 bis 8, wobei die Fügeaussparung (4,9) als ein Sackloch ausgebildet ist.

12. Verfahren nach einem der vorhergehenden Ansprüche, wobei das Zusatzmaterial (7) als ein Draht ausgebildet ist.

13. Fügepartneranordnung (1) mit einem ersten Fügepartner (2), einem zweiten Fügepartner (3) und einem Fügeelement (8), wobei der erste Fügepartner (2) und der zweite Fügepartner (3) in einer Formschlussrichtung (10) formschlüssig gefügt sind, wobei der erste Fügepartner (2) eine Fügeaussparung (4,9) und der zweite Fügepartner (3) einen Fügeabschnitt (5) aufweist, wobei ein erstarrtes Zusatzmaterial (7) das Fügeelement (8) bildet, wobei das Fügeelement (8) in der Formschlussrichtung (10) an der Fügeaussparung (4,9) formschlüssig anliegt und der Fügeabschnitt (5) in der Formschlussrichtung (10) an dem Fügeelement (8) formschlüssig anliegt.

14. Fügepartneranordnung (1) nach Anspruch 13, wobei der ersten Fügepartner (2) und der zweite Fügepartner (3) durch ein Verfahren gemäß einem der Ansprüche 1 bis 12 formschlüssig durch das Fügeelement (8) gefügt sind.
